# EUROPEAN PATENT SPECIFICATION

(11) **EP 4 565 976 B1**
(45) Date of publication and mention of the grant of the patent: **04.11.2026**
(21) Application number: 23758717.5
(22) Date of filing: 01.08.2023
(51) Int. Cl.: G06F 21/31, G06F 21/32, G06F 21/42

(54) **METHOD OF AUTHENTICATING A USER WITH HUMAN MODE**
VERFAHREN ZUR AUTHENTIFIZIERUNG EINES BENUTZERS MIT MENSCHLICHEM MODUS
PROCÉDÉ D'AUTHENTIFICATION D'UN UTILISATEUR EN MODE HUMAIN

(30) Priority: 02.08.2022 IT 202200016353
(43) Date of publication of application: 11.06.2025
(73) Proprietor: Cyber Grant Inc, Menlo Park, CA 94025 (US)
(72) Inventor: PASTORE, Valerio, 20121 Milano (IT)
(74) Representative: Praxi Intellectual Property Milano
(86) International application number: PCT/IB2023/057799
(87) International publication number: WO 2024/028771

(56) References cited:
- WO-A2-2004/079498
- US-A1- 2016 036 807
- US-A1- 2020 162 255

## Description

### TECHNICAL FIELD

The present invention relates to techniques for authenticating a user to enable him or her, after successful recognition, to a particular service.

### STATE OF THE ART

Biometric recognition systems are computer systems that aim to identify a person on the basis of one or more physiological and/or behavioral characteristics (biometrics) by comparing them with data, previously acquired and present in a system database. Biometric recognition makes use of data acquisition algorithms and sensors.

The Applicant noted that current facial recognition algorithms are not error-free as is the case, for example, when there are people with similar physiological characteristics (typically, siblings). In general, biometric recognition algorithms are more reliable the more complex they are.

Other ways of authenticating a user are based on identification codes (such as: e-mail addresses, passwords or One-Time Password (OTP) codes. Exchanged between the user and an authentication software. It should be noted that the use of ID codes is not entirely reliable because these codes can be hacked or provided by the enabled user to other unauthorized users

Document US 2020/0162255 A1 describes systems and methods for user authentication and verification techniques by way of credential-less or near credential-less user input.

Document WO 2004/079498 A2 describes authentication systems and methods for authenticating remotely located users using a device authenticator for obtaining an authenticated device identity and a user authenticator for obtaining a personal biometric measure from voice transmitted by the user using the communication device.

Document US 2016/0036807 A1 describes systems and methods for combined one-time-passcode (OTP) and knowledge-based-authentication (KBA) for identity authentication.

### SUMMARY OF THE INVENTION

The present invention addresses the problem of providing a computer-based authentication methodology, alternative to known ones, that is non-complex in implementation and offers a high level of security.

The present invention relates to an authentication method as described by claim
1 and preferred embodiments thereof as defined by claims 2-11.

### BRIEF DESCRIPTION OF THE DRAWINGS

The present invention is hereinafter described in detail, by way of example and not limitation, with reference to the accompanying drawings, in which:
- figure 1 shows schematically a form of implementation of a user authentication system by an authenticator;
- figure 2 shows by means of a flowchart an example of a first user authentication procedure included in a first authentication method;
- figure 3 shows by means of a flowchart an example of a second user authentication procedure, part of said first method;
- figure 4 shows by means of a diagram an example of a second authentication method.

### DETAILED DESCRIPTION

In this description, similar or identical elements or components will be indicated in the figures with the same identifying symbol.

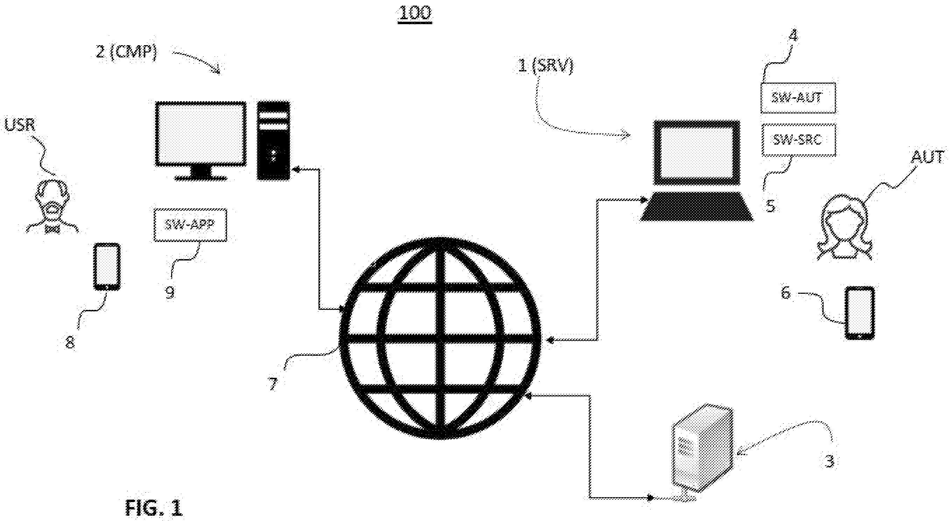

Figure 1 schematically shows an authentication system 100 comprising at least one authentication electronic device 1 (SRV), at least one user electronic device 2 (CMP).

Authentication electronic device 1 can be a computer (such as a server computer) at which an authentication software 4 (SW-AUT) and a service management software 5 (SW-SRC) reside.

The authentication software 4 is configured to manage the transmission and reception of information (e.g., messages) and/ or data exchanged among the electronic devices in system 100 and to enable an authentication of a user. Service management software 5 (which may be stored, according to another form of implementation, in an additional server computer 3) is configured to manage possible services to which the user requests access.

The electronic authentication device 1 is usable by an authenticator AUT. According to one example, the authenticator AUT may also have a mobile phone 6 (such as a first smartphone) by means of which (through special applications) it can cooperate with the authentication software 4 and/or the service management software 5.

The user electronic device 2 is a computer such as a personal computer, lap top, or tablet, or it can be a mobile phone (such as a second smartphone 8) equipped with a related application.

According to an example of implementation, the electronic user device 2 (and/or the second smartphone 8) is employed by a user of the service USR managed by the service management software 5. The system 100 can operate for multiple users and multiple authenticators.

The electronic authentication device 1 and the electronic user device 2 are connected to a telecommunication network 7 for data/information exchange. The telecommunication network 7 is, for example, an Internet network. The first smartphone 6 and the second smartphone 8 can be used to access the electronic authentication device 1 or the electronic user device 2 or, through specific applications, to replace them in some procedures. At the electronic user device 2 and/or the second smartphone 8 may reside software modules 9 (SW-AP) suitable for cooperation with the authentication software 4 and/or the service management software 5.

An example of the operation of the system 100 is described below with reference to the figures. According to this example, authenticator electronic device 1 and user electronic device 2 are in the form of computers.

Note that the described method requires that the authenticator AUT and the user USR have a certain degree of knowledge, and that is, for example, that the authenticator AUT is able to recognize the voice of the user USR and/or is able to recognize the authenticity and trust an e-mail message from him and/or an message SMS, text message, or video message of him.

Consider the situation where the user USR wishes to access a service that can be managed by Service Management Software 5. Some examples of such services are: accessing an Internet site (e.g., a corporate site), sharing a file between the user USR and the authenticator AUT (or another sender part of the 100 system), of gaining access to a restricted physical area that involves opening a door or gate (in particular, entering a building, a room, opening a safe).
When the user USR wishes to access the service, an authentication method is implemented before the user can use the service, which is described below.

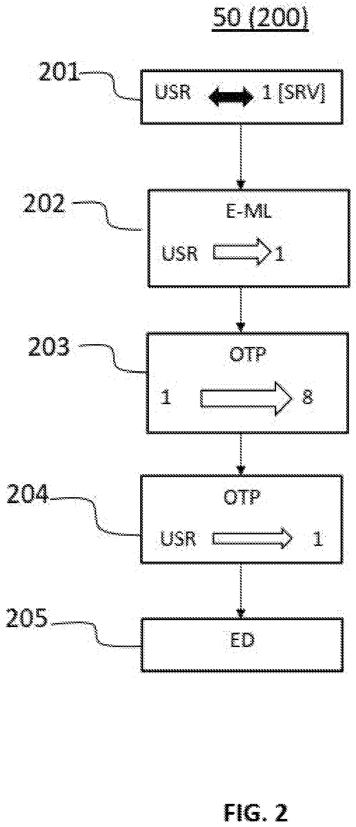

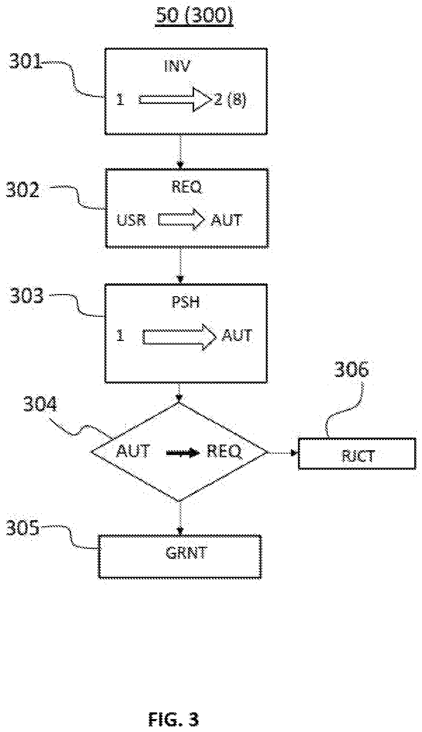

More specifically, with reference to Figures 2 and 3, a first authentication method 50 is described which includes a first authentication procedure 200 and a second authentication procedure 300 and is advantageously based on a direct acquaintance between the user USR and the authenticator AUT.

As will be seen below, the first authentication procedure 200 can be symbolically termed "electronic" in that it is handled primarily by software while the second authentication procedure 300 involves direct control carried out by the authenticator and thus can be symbolically termed "human".

Considering a particular form of implementation, the first authentication procedure 200 involves the user USR, employing the relevant user computer 2 or smartphone 8, connecting (connection phase 201) via the Internet network 7 (using browser software) to the authentication computer 1, which initiates the execution of the authentication software 4.

In addition, according to a preferred form of implementation, the first authentication procedure 200requires the user USR to enter (address entry step 202), in a dialog page, either their e-mail address E-ML or their cell phone number (which is an example of a usable identifier).

In a code sending step 203, authentication computer 1, using authentication software 4, transmits an OTP (One-Time Password) code to the entered e-mail or to the second smartphone 8 where the cell phone number entered by the user USR is in use.

In averification step 204, the user USR types the OTP code so that it is readable and verifiable by authentication software 4. In case of successful recognition, the first authentication 200 procedure is successfully concluded (closing phase first authentication 205 - ED).

Note that the example of the first authentication procedure 200 described above is preferred, but this first procedure could be conducted differently, for example, on the basis of a username (such as, for example, e-mail address) and a password (such as a password, defined in an optional registration step).

Considering the case where the first authentication procedure 200 is successful, the first authentication method 50 continues with the second authentication procedure 300, described below with reference to Figure 3.

In an invitation phase 301, the USR user receives at user computer 2 or second smartphone 8 an invitation message INV transmitted, for example, from authentication computer 1, according to authentication software 4.

In a subsequent 302 request step, the user USR sends (via user computer 2 or the second smartphone 8) an request message REQ to authentication electronic device 1 or the first smartphone 6. Such request message REQ is, preferably, a voice message (audio content), a video (moving images with preferably, an audio content) recorded by the user USR. The user USR with the request message REQ expresses his request to be recognized by the authenticator AUT for the purpose of being enabled for the particular service.

As an alternative to the voice message, the request message REQ can be a text message such as, for example, an e-mail or SMS sent to one of the devices available to the authenticator AUT.

In a alert phase 303, the authentication 4 software acts in such a way that a alert (or push) message PSH is sent to the authenticator AUT informing it about the circumstance that the user USR has submitted an authentication request related to a particular service. Such a PSH alert message may be an e-mail message, or another type of message (e.g., an SMS, voice or text message from WhatsApp) sent to the same authentication computer 1 or to the first smartphone 6 or to another device to which the authenticator AUT has access.

The authenticator AUT, following the alert message PSH, then accesses the request message REQ (message access phase 304) by listening to the voice message, watching the video, or reading the e-mail message or SMS. Then, based on how the authenticator AUT evaluates the request message REQ, the authenticator itself recognizes or does not recognize the user USR and grants (grant phase 305, GRNT) or does not grant (deny phase 306; RJCT) the user USR the enablement associated with the requested service.

Note that from the analysis of the voice or video message by the authenticator AUT ensures recognition of the user USR with high security.
Also, note that in the case where the request message REQ is a text message, it will, in order to be effective, be drafted in such a way as to ensure as much as possible the possibility of recognition, choosing, for example, a text content that is exclusive or almost exclusive knowledge of the user and the authenticator USR.

According to an optional and preferred form of implementation, the software module 9 residing at the electronic user device 2 and/or the second smartphone 8 may allow for the recording of the video message only in realtime (i.e., real-time) and may also provide for possible biometric recognition of the user's image.

The authenticator AUT shows the granting of enablement or its denial by operating on the authentication software 4 (e.g., by a flag) in a dialog box. The enabling software 4 communicates the result of the first authentication method 50 to the service management software 5 which makes the relevant service available or not to the user USR.

Note that such grant or denial of service enablement is established by directly involving the person of the authenticator AUT accessing (listening, watching, or reading) the request message REQ: this type of authentication is definable as "human authentication." In fact, as mentioned above, the authentication described can be the result of personal acquaintance between the authenticator AUT and the user USR and is the result of the direct involvement of a human being, such as the authenticator.

When enabled for the requested service, depending on the particular case, the user USR will be able to: open an encrypted file (also having any passwords), connect to a site, see himself enabled to open an electrically controlled door, or more.

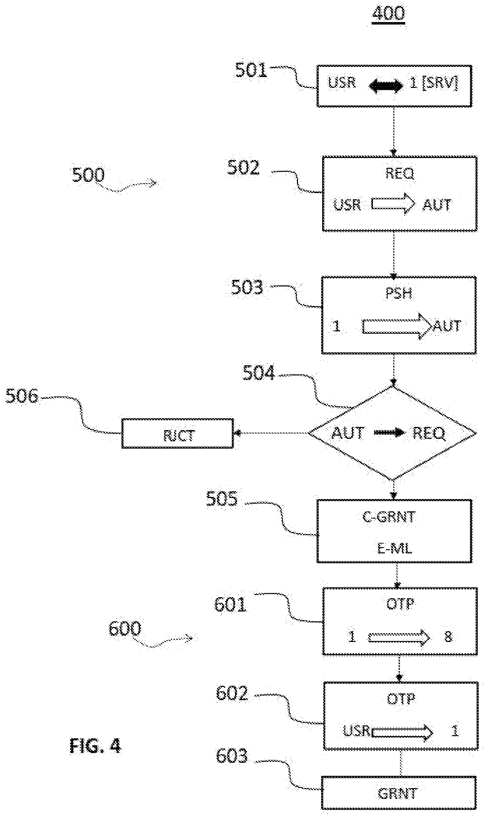

Figure 4 refers to a second authentication method400, an alternative to the method 50 described with reference to Figures 2 and 3. This second method 400 includes an initial authentication procedure 500a nd a final authentication procedure 600.

As will be seen below, in this case, the initial authentication procedure 500involves direct control performed by the authenticator and thus can be symbolically referred to as "human" authentication, while the final 600 authentication can be symbolically referred to as "electronic" authentication since it is handled primarily via software.

In the initial authentication procedure 500, the user USR, employing the relevant user computer 2 or smartphone 8, connects (connection phase 501) via the Internet network 7 (by means of a browser software) to the authentication computer 1, which starts the execution of the authentication software 4.

Through a web page opened by the user USR, it uploads and transmits the request message REQ in one or more of the forms already described (further request phase 502).

In a further alert phase 503, the authentication software 4 acts in such a way that a alert (or push) message PSH is sent to the authenticator AUT informing it about the circumstance that the user USR has submitted an authentication request related to a particular service. Such a alert message PSH may be analogous to the one already described.

The authenticator AUT, following the alert message PSH, then accesses the request message REQ (a further step in accessing the message 504) by listening to the voice message, watching the video, or reading the e-mail or message SMS. Then, based on how the authenticator AUT evaluates the request message REQ, the authenticator itself either recognizes or does not recognize the user USR and either grants the user USR a "conditional" enablement associated with the requested service (conditional enablement step 505, C-GRNT) or rejects the user's enablement (further rejection step 506; RJCT).

Again, authentication (even if conditional) can be the result of personal knowledge between the authenticator AUT and the user USR and is the result of the direct involvement of a human being, such as the authenticator.

Similar to what has already been described, the authenticator AUT shows the conditional grant or denial by operating on the authentication software 4 (e.g., by a flag) in a dialog box. Note that the enablement conditionally granted in step 505 becomes complete or is withdrawn based on the result of the final authentication procedure 600, which follows.

In more detail, in the conditional enablement phase 505, the authenticator AUT (who has already recognized the user USR) makes available (i.e., enters) through authentication software 4 the e-mail address and/or telephone number of the user USR he has recognized and which are data he already knows.

At this point the final authentication procedure 600 can be schematically considered to begin. In a further code sending step 601, authentication computer 1, using authentication software 4, transmits an OTP (One-Time Password) code to the e-mail or second smartphone 8 where the USR user's cell phone number is in use, as provided by the authenticator AUT.

In a further verification step602, the user USR types and sends the OTP code so that it is readable and verifiable by the authentication software 4.

If this OTP code is recognized, the final authentication procedure 600 is successfully concluded and the conditional authentication expressed earlier is fully effective (further granting step 603, GRNT). Similar to the method in Figures 2 and 3, the user USR will be able to: open an encrypted file (also having any passwords), connect to a site, see himself enabled to open an electrically controlled door, or more. With reference to both the first method 50 and the second method 400, note that in the rejection step 306 or the further rejection step 506, the authenticator AUT can, according to a preferred mode, enter (via the authentication software 4) an explanation of why he or she has rejected the enablement (e.g., "I don't know who you are"). This explanation is made available to the user USR via user device 2 or the second smartphone 8. According to a particular form of implementation, the user USR has the option of responding to the rejection by sending a new message (which may be of the same type as the request REQ and sent in a similar manner to this one) providing clarification or other elements that better identify him or her to the authenticator AUT.

The authenticator AUT, by accessing this new message (in a manner analogous to what has already been described for the request message REQ) may change his mind, granting the previously denied enablement, or he may confirm the denial. Note that such an exchange between the authenticator and the user USR can be repeated several times.

The authentication methods described above can be combined with other possible protection and security procedures dependent on the particular service requested and, by way of example, included in service management software 5. According to a particularly preferred form of implementation, there may be provision for the authenticator AUT to set a degree of trustworthiness or confidence that he deems appropriate for that particular user USR. This degree of trustworthiness confers different types of enablements on the user USR in the use of the service to which he or she has gained access.

Considering the example of accessing an encrypted file, the authenticator AUT may set a first degree of trustworthiness for which the user USR is enabled to open only the encrypted file for which the request was made, and then that user will have to repeat the methodology described here in the event that he or she needs to decrypt other files provided.

In addition, a second degree of reliability may be provided for which the user is enabled to open the encrypted file and also other files, without having to repeat the method the authorization again or by repeating only the first authentication procedure 200 and not the second procedure 300. Preferably, it is also possible for the authenticator AUT to associate this second degree of reliability with a maximum time duration (e.g., 3 months or 50 years) or a maximum number of operations.
Preferably, it is possible to allow the authenticator AUT to set particular modes of access to the service requested by the user USR. Referring again to the example of the encrypted file, such modes of access may be: to allow only the viewing of the decrypted file or to allow also its downloading locally, its printing and blocking or not its capture from the screen, to give or not the recipient the power to modify the file.

The degree of reliability, the maximum time duration, the maximum number of operations, and the access mode are, preferably, modifiable by the AUT authenticator. Legend of figure symbols
- authentication system 100
- electronic authentication device 1 (SRV)
- electronic user device 2 (CMP)
- authentication software 4 (SW-AUT)
- service management software 5 (SW-SRC);
- computer server 3
- authenticator AUT
- user USR
- first mobile phone 6
- second mobile phone 8
- telecommunication network 7
- software modules 9 (SW-AP)
- first authentication method 50
- first authentication procedure 200
- connection phase 201
- address entry phase 202
- user's e-mail address E-ML
- sending code phase 203
- OTP code
- verification phase 204
- closing phase first authentication 205
- second authentication phase 300
- invitation phase 301
- INV invitation message
- 302 request phase
- warning phase 303
- PSH warning message
- 304 message access phase
- granting phase 305
- denial phase 306
- second authentication method 400,
- initial authentication procedure 500
- final authentication procedure 600
- further connection phase 501
- further request phase 502
- further warning phase 503
- further message access phase 504
- conditional enable phase 505
- further denial phase 506
- final authentication 600
- further code sending phase 601
- further verification phase 602
- further granting phase 603

## Claims

1. Method (50; 400) of authenticating a user (USR) by an authenticator person (AUT), comprising:
- providing an authentication electronic device (1, 6) accessible to the authenticator person (AUT) and equipped with authentication software (4) and service management software (5);
- providing a user electronic device (2, 8) to a user (USR);
- enabling communication between the user electronic device (2, 8) and the authentication electronic device (1, 6);
- performing electronic authentication (200; 600) by exchanging data/information between the user electronic device (2, 8) and the authentication electronic device (1, 6);
- performing, prior or subsequent to said electronic authentication (200; 600), a human authentication (300; 500) involving an authenticator person (AUT) including:
sending (302; 502) a request message (REQ) from the user (USR) via the user electronic device (2, 8) to the authentication electronic device (1); in which the request message (REQ) is at least one of the following message types: voice, video, text;
analyzing (304; 504) by the authenticator person (AUT) the request message (REQ) to recognize the user (USR);
granting (305; 505) by the authenticator person (AUT) a service enablement (GRNT; C-GRNT) in case of recognizing the user (USR), recording the occurred user recognition by the authentication software (4).

2. Method (50; 400) according to claim 1, further comprising:
rejecting (306; 506) by the authenticator person (AUT) a service enablement in case of failure to recognize the user (USR), recording the occurred failure to recognize by the authentication software (4).

3. Method (200, 300) according to claim 1, further comprising.
before sending (302) said request message (REQ), receiving (301) at the electronic user device (USR) an invitation message (INV) transmitted according to the authentication software (4) and inviting the user to perform said human authentication (300).

4. Method (50;400) according to claim 1, further comprising:
before analizing (304;504) by the authenticator person (AUT) the request
message (REQ), receiving (303) from the authenticator person (AUT) and via the
authentication software (4) an alert message (PSH) informing the authenticator person
(AUT) about the successful sending of the request message (REQ).

5. Method (50; 400) according to claim 1, wherein said electronic authentication (200; 600) comprises:
sending by the authentication device (1, 6) to the user device (2, 8) a code of the type one-time-password (OTP).

6. Method (400) according to claim 1, wherein said electronic authentication (600) is subsequent to human authentication (500) and wherein:
granting (505) by the authenticator person (AUT) the service enablement (C-GRNT) includes granting an enablement conditional on the result of the subsequent electronic authentication (600).

7. Method (400) according to claim 6, wherein said electronic authentication (600) is subsequent to human authentication (500) and wherein:
said human authentication (500) further includes providing (505) by the authenticator person (AUT) to the authentication software (4) an e-mail address (E-ML) and/or telephone number of the user (USR), in case the user (SR) is recognized by the authenticator person (AUT);
said electronic authentication (600) includes:
sending (601) by the authentication device (1, 6) to the user device (2, 8) a code of the type one-time-password (OTP);
sending (602) to the authentication software (4) by the user (USR) said code of the type one-time-password (OTP) received at the user device (2, 8);
recognizing (603) by the authentication software (4) said code of the one-time-password (OTP) and converting said conditional enablement into a human authentication procedure (300).

8. Method (50; 400) according to claim 6, wherein said electronic authentication (200; 600) comprises:
sending by the authentication device (1, 6) to the user device (2, 8) a code of the type one-time-password (OTP).

9. Method (50;) according to claim 1, in which electronic authentication (200) precedes the human authentication procedure (300) and includes:
connecting (201) the electronic user device (2, 8) and the authentication device (1, 6) via a communication network (7) and activating the authentication software (4);
providing (202) by the user (USR) to the authentication software (4) an e-mail address (E-ML) and/or a telephone number;
receiving (203) to an additional user device (8) and from the authentication device (1, 6) a code of the type one-time-password (OTP);
sending (204) by the user (USR) said code of the type one-time-password (OTP) to the authentication software (4);
recognizing (205) by the authentication software (4) said code of the type one-time-password (OTP) before starting the human authentication procedure (300).

10. Method (50; 400) according to claim 1, wherein the service management software (5) is configured to manage the receiving and sending of data/information and/or command signals from electronic devices in connection with a service belonging to the group: accessing an Internet site, sharing a file, enabling access to a restricted physical area involving the opening of a locking device.

11. Method (50; 400) according to claim 1, further comprising:
defining by the authenticator person (AUT) and by means of the electronic authentication device (1,6) a degree of trustworthiness associated with the user; wherein said degree of trustworthiness is selectable by the authenticator person (AUT) from a plurality of degrees of trustworthiness that give the user different faculties belonging to the group: enabling a single access to the service; enabling multiple accesses to the service without repeating said human authentication procedure (300); enabling access to the service for a predetermined period of time.

## Patentansprüche

1. Verfahren (50; 400) zum Authentifizieren eines Benutzers (USR) durch eine Authentifizierungsperson (AUT), umfassend:
- Bereitstellen einer elektronischen Authentifizierungsvorrichtung (1, 6), die für die Authentifizierungsperson (AUT) zugänglich ist und mit Authentifizierungssoftware (4) und Dienstverwaltungssoftware (5) ausgestattet ist;
- Bereitstellen einer elektronischen Benutzervorrichtung (2, 8) für einen Benutzer (USR);
- Ermöglichen einer Kommunikation zwischen der elektronischen Benutzervorrichtung (2, 8) und der elektronischen Authentifizierungsvorrichtung (1, 6);
- Durchführen einer elektronischen Authentifizierung (200; 600) durch Austauschen von Daten/Informationen zwischen der elektronischen Benutzervorrichtung (2, 8) und der elektronischen Authentifizierungsvorrichtung (1, 6);
- Durchführen einer menschlichen Authentifizierung (300; 500) unter Einbeziehung einer Authentifizierungsperson (AUT) vor oder nach der elektronischen Authentifizierung (200; 600), einschließlich:
Senden (302; 502) einer Anforderungsnachricht (REQ) von dem Benutzer (USR) über die elektronische Benutzervorrichtung (2, 8) an die elektronische Authentifizierungsvorrichtung (1); wobei die Anforderungsnachricht (REQ) mindestens einem der folgenden Nachrichtentypen entspricht: Sprache, Video, Text;
Analysieren (304; 504), durch die Authentifizierungsperson (AUT), der Anforderungsnachricht (REQ), um den Benutzer (USR) zu erkennen;
Gewähren (305; 505), durch die Authentifizierungsperson (AUT), einer Dienstfreigabe (GRNT; C-GRNT) bei Erkennen des Benutzers (USR), Aufzeichnen der erfolgten Benutzererkennung durch die Authentifizierungssoftware (4).

2. Verfahren (50; 400) nach Anspruch 1, ferner umfassend:
Ablehnen (306; 506), durch die Authentifizierungsperson (AUT), einer Dienstfreigabe im Falle eines Nichterkennens des Benutzers (USR), Aufzeichnen der erfolgten Nichterkennung durch die Authentifizierungssoftware (4).

3. Verfahren (200, 300) nach Anspruch 1, ferner umfassend:
vor dem Senden (302) der Anforderungsnachricht (REQ), Empfangen (301), an der elektronischen Benutzervorrichtung (USR), einer Einladungsnachricht (INV), die gemäß der Authentifizierungssoftware (4) übertragen wird und den Benutzer einlädt, die menschliche Authentifizierung (300) durchzuführen.

4. Verfahren (50; 400) nach Anspruch 1, ferner umfassend:
vor dem Analysieren (304;504) der Anforderungsnachricht (REQ) durch die Authentifizierungsperson (AUT), Empfangen (303), von der Authentifizierungsperson (AUT) und über die Authentifizierungssoftware (4), einer Benachrichtigung (PSH), die die Authentifizierungsperson (AUT) über das erfolgreiche Senden der Anforderungsnachricht (REQ) informiert.

5. Verfahren (50; 400) nach Anspruch 1, wobei die elektronische Authentifizierung (200; 600) Folgendes umfasst:
Senden, durch die Authentifizierungsvorrichtung (1, 6), eines Codes vom Typ Einmalpasswort (OTP) an die Benutzervorrichtung (2, 8).

6. Verfahren (400) nach Anspruch 1, wobei die elektronische Authentifizierung (600) im Anschluss an die menschliche Authentifizierung (500) erfolgt und wobei:
das Gewähren (505) der Dienstfreigabe (C-GRNT) durch die Authentifizierungsperson (AUT) das Gewähren einer Freigabe abhängig von dem Ergebnis der anschließenden elektronischen Authentifizierung (600) einschließt.

7. Verfahren (400) nach Anspruch 6, wobei die elektronische Authentifizierung (600) im Anschluss an die menschliche Authentifizierung (500) erfolgt und wobei:
die menschliche Authentifizierung (500) ferner das Bereitstellen (505), durch die Authentifizierungsperson (AUT) an die Authentifizierungssoftware (4), einer E-Mail-Adresse (E-ML) und/oder Telefonnummer des Benutzers (USR) einschließt, falls der Benutzer (SR) durch die Authentifizierungsperson (AUT) erkannt wird;
wobei die elektronische Authentifizierung (600) Folgendes einschließt:
Senden (601), durch die Authentifizierungsvorrichtung (1, 6), eines Codes vom Typ Einmalpasswort (OTP) an die Benutzervorrichtung (2, 8);
Senden (602), an die Authentifizierungssoftware (4) durch den Benutzer (USR), des an der Benutzervorrichtung (2, 8) empfangenen Codes vom Typ Einmalpasswort (OTP);
Erkennen (603), durch die Authentifizierungssoftware (4), des Codes des Einmalpassworts (OTP) und Umwandeln der bedingten Freigabe in eine menschliche Authentifizierungsprozedur (300).

8. Verfahren (50; 400) nach Anspruch 6, wobei die elektronische Authentifizierung (200; 600) Folgendes umfasst:
Senden, durch die Authentifizierungsvorrichtung (1, 6), eines Codes vom Typ Einmalpasswort (OTP) an die Benutzervorrichtung (2, 8).

9. Verfahren (50;) nach Anspruch 1, wobei die elektronische Authentifizierung (200) der menschlichen Authentifizierungsprozedur (300) vorausgeht und Folgendes einschließt:
Verbinden (201) der elektronischen Benutzervorrichtung (2, 8) und der Authentifizierungsvorrichtung (1, 6) über ein Kommunikationsnetzwerk (7) und Aktivieren der Authentifizierungssoftware (4);
Bereitstellen (202), durch den Benutzer (USR) an die Authentifizierungssoftware (4), einer E-Mail-Adresse (E-ML) und/oder einer Telefonnummer;
Empfangen (203), an einer zusätzlichen Benutzervorrichtung (8) und von der Authentifizierungsvorrichtung (1, 6), eines Codes vom Typ Einmalpasswort (OTP);
Senden (204), durch den Benutzer (USR), des Codes vom Typ Einmalpasswort (OTP) an die Authentifizierungssoftware (4);
Erkennen (205), durch die Authentifizierungssoftware (4), des Codes vom Typ Einmalpasswort (OTP) vor dem Starten der menschlichen Authentifizierungsprozedur (300).

10. Verfahren (50; 400) nach Anspruch 1, wobei die Dienstverwaltungssoftware (5) konfiguriert ist, um das Empfangen und Senden von Daten/Informationen und/oder Befehlssignalen von elektronischen Vorrichtungen in Zusammenhang mit einem Dienst zu verwalten, der zu der Gruppe gehört: Aufrufen einer Internetseite, Teilen einer Datei, Ermöglichen des Zugangs zu einem beschränkten physischen Bereich, was das Öffnen einer Verriegelungsvorrichtung beinhaltet.

11. Verfahren (50; 400) nach Anspruch 1, ferner umfassend:
Definieren, durch die Authentifizierungsperson (AUT) und mittels der elektronischen Authentifizierungsvorrichtung (1, 6), eines dem Benutzer zugeordneten Vertrauenswürdigkeitsgrades; wobei der Vertrauenswürdigkeitsgrad durch die Authentifizierungsperson (AUT) aus einer Vielzahl von Vertrauenswürdigkeitsgraden auswählbar ist, die dem Benutzer unterschiedliche Berechtigungen gewähren, die zu der Gruppe gehören: Ermöglichen eines einmaligen Zugriffs auf den Dienst; Ermöglichen mehrerer Zugriffe auf den Dienst ohne Wiederholen der menschlichen Authentifizierungsprozedur (300); Ermöglichen des Zugriffs auf den Dienst für einen vorbestimmten Zeitraum.

## Revendications

1. Procédé (50 ; 400) pour l'authentification d'un utilisateur (USR) par une personne réalisant l'authentification (AUT), comprenant :
- la fourniture d'un dispositif électronique d'authentification (1, 6) accessible à la personne réalisant l'authentification (AUT) et pourvu d'un logiciel d'authentification (4) et d'un logiciel de gestion de service (5) ;
- la fourniture d'un dispositif électronique d'utilisateur (2, 8) à un utilisateur (USR) ;
- le fait de permettre une communication entre le dispositif électronique d'utilisateur (2, 8) et le dispositif électronique d'authentification (1, 6) ;
- la réalisation d'une authentification électronique (200 ; 600) en échangeant des données/informations entre le dispositif électronique d'utilisateur (2, 8) et le dispositif électronique d'authentification (1, 6) ;
- la réalisation, avant ou après ladite authentification électronique (200 ; 600), d'une authentification humaine (300 ; 500) impliquant une personne réalisant l'authentification (AUT) comportant :
l'envoi (302 ; 502) d'un message de demande (REQ) provenant de l'utilisateur (USR) au dispositif électronique d'authentification (1) par l'intermédiaire du dispositif électronique d'utilisateur (2, 8) ; dans lequel le message de demande (REQ) est au moins l'un des types de message suivants : vocal, vidéo, texte ;
l'analyse (304 ; 504), par la personne réalisant l'authentification (AUT), du message de demande (REQ) pour reconnaître l'utilisateur (USR) ;
l'octroi (305 ; 505), par la personne réalisant l'authentification (AUT), d'une permission d'accès au service (GRNT ; C-GRNT) en cas de reconnaissance de l'utilisateur (USR), et l'enregistrement de la reconnaissance de l'utilisateur survenue par le logiciel d'authentification (4).

2. Procédé (50 ; 400) selon la revendication 1, comprenant en outre :
le rejet (306 ; 506), par la personne réalisant l'authentification (AUT), d'une permission d'accès au service en cas d'échec de reconnaissance de l'utilisateur (USR), et l'enregistrement de l'échec de reconnaissance survenu par le logiciel d'authentification (4).

3. Procédé (200 ; 300) selon la revendication 1, comprenant en outre :
avant l'envoi (302) dudit message de demande (REQ), la réception (301), au niveau du dispositif utilisateur électronique (USR), d'un message d'invitation (INV) transmis selon le logiciel d'authentification (4) et invitant l'utilisateur à réaliser ladite authentification humaine (300).

4. Procédé (50 ; 400) selon la revendication 1, comprenant en outre :
avant l'analyse (304 ;504), par la personne réalisant l'authentification (AUT), du message de demande (REQ), la réception (303), en provenance de la personne réalisant l'authentification (AUT) et par l'intermédiaire du logiciel d'authentification (4), d'un message d'alerte (PSH) informant la personne réalisant l'authentification (AUT) de l'envoi réussi du message de demande (REQ).

5. Procédé (50 ; 400) selon la revendication 1, dans lequel ladite authentification électronique (200 ; 600) comprend :
l'envoi, par le dispositif d'authentification (1, 6) au dispositif utilisateur (2, 8), d'un code du type mot de passe à usage unique (OTP).

6. Procédé (400) selon la revendication 1, dans lequel ladite authentification électronique (600) est postérieure à l'authentification humaine (500) et dans lequel :
l'octroi (505), par la personne réalisant l'authentification (AUT), de la permission d'accès au service (C-GRNT) comporte l'octroi d'une permission conditionnée au résultat de l'authentification électronique (600) postérieure.

7. Procédé (400) selon la revendication 6, dans lequel ladite authentification électronique (600) est postérieure à l'authentification humaine (500) et dans lequel :
ladite authentification humaine (500) comporte en outre la fourniture (505), par la personne réalisant l'authentification (AUT) au logiciel d'authentification (4), d'une adresse électronique (E-ML) et/ou d'un numéro de téléphone de l'utilisateur (USR), dans le cas où l'utilisateur (SR) est reconnu par la personne réalisant l'authentification (AUT) ;
ladite authentification électronique (600) comporte :
l'envoi (601), par le dispositif d'authentification (1, 6) au dispositif utilisateur (2, 8), d'un code du type mot de passe à usage unique (OTP) ;
l'envoi (602), au logiciel d'authentification (4) par l'utilisateur (USR), dudit code du type mot de passe à usage unique (OTP) reçu au niveau du dispositif utilisateur (2, 8) ;
la reconnaissance (603), par le logiciel d'authentification (4), dudit code du mot de passe à usage unique (OTP) et la conversion de ladite permission conditionnée en une procédure d'authentification humaine (300).

8. Procédé (50 ; 400) selon la revendication 6, dans lequel ladite authentification électronique (200 ; 600) comprend :
l'envoi, par le dispositif d'authentification (1, 6) au dispositif utilisateur (2, 8), d'un code du type mot de passe à usage unique (OTP).

9. Procédé (50 ;) selon la revendication 1, dans lequel une authentification électronique (200) précède la procédure d'authentification humaine (300) et comporte :
la connexion (201) du dispositif utilisateur électronique (2, 8) au dispositif d'authentification (1, 6) par l'intermédiaire d'un réseau de communication (7) et l'activation du logiciel d'authentification (4) ;
la fourniture (202), par l'utilisateur (USR) au logiciel d'authentification (4), d'une adresse électronique (E-ML) et/ou d'un numéro de téléphone ;
la réception (203), sur un dispositif utilisateur (8) supplémentaire et en provenance du dispositif d'authentification (1, 6), d'un code du type mot de passe à usage unique (OTP) ;
l'envoi (204), par l'utilisateur (USR), dudit code du type mot de passe à usage unique (OTP) au logiciel d'authentification (4) ;
la reconnaissance (205), par le logiciel d'authentification (4), dudit code du type mot de passe à usage unique (OTP) avant le démarrage de la procédure d'authentification humaine (300).

10. Procédé (50 ; 400) selon la revendication 1, dans lequel le logiciel de gestion de service (5) est configuré pour gérer la réception et l'envoi de données/informations et/ou de signaux de commande provenant de dispositifs électroniques en relation avec un service appartenant au groupe : accès à un site internet, partage d'un fichier, fait de permettre un accès à une zone d'accès physique limité impliquant l'ouverture d'un dispositif de verrouillage.

11. Procédé (50 ; 400) selon la revendication 1, comprenant en outre :
la définition, par la personne réalisant l'authentification (AUT) et au moyen du dispositif d'authentification électronique (1, 6), d'un degré de fiabilité associé à l'utilisateur ; dans lequel ledit degré de fiabilité est sélectionnable par la personne réalisant l'authentification (AUT) parmi une pluralité de degrés de fiabilité qui confèrent à l'utilisateur différentes facultés appartenant au groupe : fait de permettre un accès unique au service ; fait de permettre de multiples accès au service sans répétition de ladite procédure d'authentification humaine (300) ; fait de permettre un accès au service pendant une période de temps prédéterminée.
